Europäisches Patentamt

European Patent Office

Office européen des brevets

(19)

(11) Veröffentlichungsnummer: **0 001 111**

**B1**

(12)   **EUROPÄISCHE PATENTSCHRIFT**

(21) Anmeldenummer: 78100829.7

(22) Anmeldetag: 06.09.78

(51) Int. Cl.³: **B 29 D 7/24, B 29 D 7/02**

(54) Verfahren und Vorrichtung zur Blasfolienherstellung

(30) Priorität: 09.09.77 DE 2740629

(43) Veröffentlichungstag der Anmeldung:
21.03.79 Patentblatt 79/06

(45) Bekanntmachung des Hinweises auf die Patenterteilung:
07.01.81 Patentblatt 81/01

(84) Benannte Vertragsstaaten:
BE CH DE FR GB LU NL SE

(56) Entgegenhaltungen:
DE - A - 2 043 129
DE - A - 2 461 720
DE - C - 917 033
US - A - 3 400 184
US - A - 3 650 644

(73) Patentinhaber: **Pannenbecker, Heinrich**
**Siebengebirgstrasse 53**
**D - 5300 Bonn-Holzlar (DE)**

(72) Erfinder: **Pannenbecker, Heinrich**
**Siebengebirgstrasse 53**
**D - 5300 Bonn-Holzlar (DE)**

(74) Vertreter: **Selting, Günther, Dipl.-Ing., et al**
**Deichmannhaus am Hauptbahnhof**
**D - 5000 Köln 1 (DE)**

Courier Press, Leamington Spa, England.

## Verfahren und Vorrichtung zur Blasfolienherstellung

Die Erfindung betrifft ein Folienblasverfahren, bei welchem durch Extrusion ein Folienschlauch hergestellt und durch inneren Überdruck zu einer Folienblase aufgeweitet wird, die sich von einer Stelle kleinsten Durchmessers aus zunächst zunehmend erweitert und über eine Wendepunktstelle eine Stelle maximalen Durchmessers erreicht, um anschließend flachgelegt zu werden, sowie eine Vorrichtung zur Durchführung des Verfahrens.

Um bei der Durchführung eines Folienblasverfahrens den Durchmesser der Folienblase konstant zu halten (DE—A—2 043 129; US—A—3 400 184; DE—C—917 033), wird an derjenigen Stelle, an der die Folienblase ihren endgültigen Durchmesser erreicht, eine Lichtschrankenanordnung angeordnet, die einen tangential zu der Folienblase verlaufenden Lichtstrahl erzeugt und ein Ventil steuert, das die Zufuhr von Druckgas in die Folienblase regelt. Wird der Lichtstrahl der Lichtschranke von der Folienblase unterbrochen, dann wird das Ventil von der Lichtschranke abgesperrt, so daß die Druckgaszufuhr in die Folienblase hinein unterbrochen oder gedrosselt wird. Unterbricht die Folienblase dagegen die Lichtschranke nicht, dann wird das Ventil geöffnet und die Druckgaszufuhr in die Folienblase erhöht. Auf diese Weise wird durch Regelung der Druckgaszufuhr in die Folienblase der Durchmesser des erzeugten Schlauches konstant gehalten. Es kann allerdings nicht verhindert werden, daß das noch weiche Folienmaterial im Aufweitungsbereich der Folienblase, z.B. infolge von Temperaturveränderungen am Ausgang des Extruders, abreißt.

Bei der Durchführung des Folienblasverfahrens, insbesondere bei der Herstellung von Folien aus hochmolekularem Niederdruck-Polyäthylen, stellt die Einstellung und Beibehaltung stabiler Prozeßbedingungen ein entscheidendes Problem dar. Die Qualität und Gleichmäßigkeit der erzeugten Folie hängt beispielsweise von der Wahl und Zusammensetzung der Katalysatorkomponenten, dem Polymerisationsmedium, dem Druck, der Temperatur, der Extrusionsgeschwindigkeit und von der konstruktiven Ausführung des Extruders und der Extrusionsdüse ab. Die Kombination geeigneter Werte dieser Einflußgrößen ergibt eine stabile Betriebsweise stets nur in einem begrenzten Toleranzbereich. Diese Toleranzen werden in der Praxis relativ häufig überschritten, insbesondere bei der Herstellung papierähnlicher Folien aus hochmolekularem Niederdruck-Polyäthylen, so daß bei der Herstellung derartiger Folien häufig Maschinenstillstand oder die Herstellung minderwertiger Qualität eintritt.

Die Schwierigkeiten haben ihre Ursache u.a. in der folgenden Tatsachen:

1. Temperatur- und/oder Druckanzeigen beim Extruder reichen zur Kennzeichnung der Beschaffenheit bzw. des Aufblasverhaltens der Schmelze nicht aus. Die Regelung dieser Größen bietet keine Gewähr für eine bestimmte oder auch nur zeitlich konstante Materialqualität.

2. Von der Temperatur der Schmelze kann in relativ weiten Bereichen nicht auf die Viskosität der Schmelze geschlossen werden.

3. Menge und Temperatur der Kühlluft haben beim Fertigungsprozeß nicht nur die Aufgabe, Wärme von der Oberfläche der Folienblase abzuführen; sie haben darüber hinaus bei der Herstellung papierähnlicher Folien einen großen Einfluß auf die Papierähnlichkeit, die Toleranzen der Wandstärke und die Festigkeit in Längs- und Querrichtung.

4. Auch bei konstanter Leistung des Extruders und konstanter Abzugsgeschwindigkeit der Folie ist das Quadratmetergewicht der erzeugten Folien (und damit die Wandstärke) nicht notwendigerweise konstant. Dies liegt daran, daß bereits kleine Temperaturänderungen im Einzugsbereich des Extruders große Abweichungen der Ausstoßmenge zur Folge haben können.

5. Vielfach wird die Flachlegebreite der Folie vor dem Aufwickeln überwacht. Das Überwachungsergebnis eignet sich aber nicht als Meßgröße für die Regelung der Folienbreite, weil die Laufzeit vom Extruder bis zur Aufwickelvorrichtung zu groß ist. Der Fertigungsprozeß kann bereits nachhaltig gestört oder sogar zusammengebrochen sein, wenn an der Meßstelle noch die vorgegebenen Werte registriert werden.

6. Über die Zusammenhänge zwischen den rohstoffbedingten Eigenschaften und den fertigungstechnischen Gegebenheiten in bezug auf die Stabilität des Herstellungsprozesses und die Qualität der Folie liegen bisher nur unzureichende Erkenntnisse vor. Die für einen bestimmten Rohstoff gefundenen Ergebnisse lassen sich nicht auf andere Rohstoffe übertragen oder umrechnen.

Aufgabe der Erfindung ist es, bei dem bekannten Folienblasverfahren der eingangs genannten Art Stabilitätszustand der Folienblase zu überwachen, um einerseits einer sich anbahnenden Verschlechterung der Folienqualität rechtzeitig durch entsprechende Gegenmaßnahmen begegnen zu können, und um andererseits für verschiedenartige Maschinen und/oder Schmelzenmaterialien die günstigste Wahl der Verfahrensparameter anhand der Form der Folienblase bestimmen zu können.

Zur Lösung dieser Aufgabe ist erfindungsgemäß vorgesehen, daß die Weite der Folienblase an einer ersten Meßstelle zwischen der Wendepunktstelle und der Stelle maximalen Durchmessers überwacht wird.

Die Erfindung geht von dem Gedanken aus, daß die verschiedenen, zum Teil sehr komplexen Verfahrensparameter, insgesamt bei richtiger Auswahl eine optimale Form der Folienblase ergeben. Wenn diese Form erreicht ist, ist die Folienblase relativ stabil und damit eine gleichmäßige und reproduzierbare Folienherstellung gewährleistet. Hierbei ist die Erkenntnis wichtig, daß Änderunden irgendeines Parameters, die zu einer Verschlechterung der Folienqualität führen, zunächst Auswirkungen auf die Form der Folienblase haben. Da die Folienblase direkt im Anschluß an den Extruder erzeugt wird, werden bei Überwachung der Einhaltung der Form der Folienblase etwaige Abweichungen unverzüglich erkannt, so daß sogleich eine Regelung einsetzen kann, mit der der weiteren Abweichung der Folienblase von ihrer Optimalform entgegengewirkt wird. Entscheidend ist ferner der Umstand, daß von einer Änderung der Form der Folienblase in erster Linie der Bereich zwischen dem Wendepunkt und dem Maximalwert betroffen ist, unter der Voraussetzung, daß die Folienblase einen Ring oder dgl. passiert, der ihre endgültige Größe festlegt. Eine häufig auftretende Fehlerursache ist beispielsweise das Absinken des Blasendruckes. In diesem Falle verringert sich der Blasendurchmesser am stärksten in dem Bereich zwischen der Wendepunktstelle und der Stelle maximalen Durchmessers. Wird eine solche Veränderung erkannt, kann die Blasluftmenge erhöht werden.

Der Durchmesser der Folienblase als Funktion der Länge der Folienblase folgt in ziemlich guter Annäherung einer Gleichung dritten Grades, die zwei Maxima und einen Wendepunkt hat. Die Bereiche zwischen dem oberen Maximum und dem Wendepunkt und der Bereich zwischen dem unteren Maximum und dem Wendepunkt reagieren besonders empfindlich auf Änderungen der Verfahrensparameter, und ihre Verläufe bzw. Abweichungen von der Idealkurve geben Aufschluß über drohende Instabilitäten.

In vorteilhafter Weiterbildung der Erfindung wird in Abhängigkeit von der an der zweiten Meßstelle ermittelten Weite der Folienblase die Menge von Kühlluft geregelt, die von außen gegen den Folienschlauch geblasen wird. Die Menge der äußeren Kühlluft ist von großer Bedeutung für den Verfahrensablauf. Sie ist äußerst kritisch einzustellen und ihr Einfluß auf die Form der Folienblase ist häufig nicht-linear.

Die Erfindung betrifft ferner eine Folienblasvorrichtung mit einer ringförmigen Extruderdüse, die einen Blasluftauslaß aufweist, mindestens einem im Abstand von der Extruderdüse angeordneten Ring zur Fixierung der Folienblase, und mit einer hinter dem Ring angeordneten Flachlege- und Abzugsvorrichtung. Hierbei ist an der ersten Meßstelle P zwischen der Wendepunktstelle der Folienblase und der Stelle maximalen Durchmessers eine Abtastvorrichtung angeordnet, die die radiale Aufweitung der Folienblase und/oder den Abstand von P von der Extruderdüse überwacht.

Die Abtastvorrichtung darf keine Auswirkungen auf die Form der Folienblase haben. Vorzugsweise verwendet man eine optische Abtastvorrichtung aus einer oder mehreren Lichtschranken.

Im folgenden wird die Erfindung unter Bezugnahme auf die Figuren an Ausführungsbeispielen näher erläutert.

Fig. 1 zeigt schematisch den Aufbau einer Folienblasvorrichtung,

Fig. 2 veranschaulicht die Verläufe einiger Folienblasen,

Fig. 3 zeigt die Anordnung einer Lichtschranke bei einer Regeleinrichtung zur Aufrechterhaltung der Blasenweite durch Steuerung der Stützluftmenge,

Fig. 4 zeigt den konstruktiven Aufbau der Lichtschranke in Fig. 3, und

Fig. 5 zeigt schematisch die Anordnung eines Fotozellenbandes an der zweiten Meßstelle zur Regelung der äußeren Kühlluftmenge.

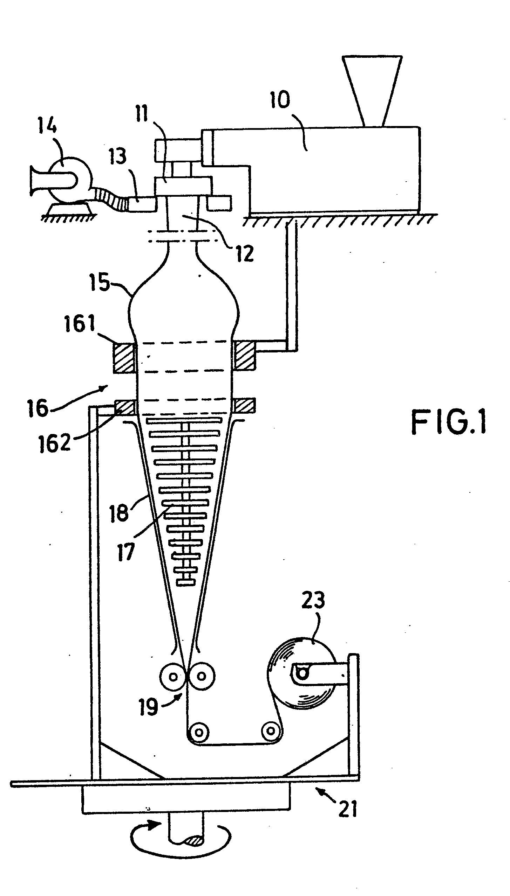

Bei dem in Fig. 1 dargestellten Folienblasverfahren wird das Schmelzenmaterial in einen Extruder 10 eingegeben, der eine (nicht dargestellte) Extruderschnekke sowie eine Heizvorrichtung enthält. Die Schmelze wird dem Blaskopf 11 zugeführt, der eine ringförmige Extruderdüse aufweist, aus der der Schlauch 12 austritt. Durch den Blaskopf 11 hindurch wird dem Schlauch Stützluft zugeführt. Der Blaskopf 11 ist von einem Kühlring 13 umgeben, dem von einem Gebläse 14 Kühlluft zugeführt wird. Die Kühlluft wird von außen gegen den Schlauch 12 geblasen.

Nachdem der Schlauch 12 eine gewisse Strecke durchlaufen hat, weitet er sich zu der Schlauchblase 15 auf, deren Durchmesser etwa das Doppelte bis Vierfache des Schlauchdurchmessers beträgt. Die Schlauchblase läuft durch die Führung 16, die aus zwei Stützringen 161 und 162 besteht, hindurch, in der sie auf das endgültige Maß fixiert wird, und wird anschließend flach zusammengelegt. Der Stützring 161, der der Extruderdüse zugewandt ist, hat eine erheblich größere Länge als der nachfolgende Stützring 162. Zum Zusammenlegen des Folienschlauches dienen Seitenführungen 17, 18, die in Transportrichtung der Folie auseinanderlaufen bzw. zusammenlaufen und den Folienschlauch einem Quetschwalzenpaar 19 zuführen. Der zusammengelegte Folienschlauch wird anschließend auf eine Trommel 23 aufgewickelt. Der Stützring 162, die Seitenführungen 17, 18, das Quetschwalzenpaar 19 sowie die Aufwickeltrommel 23 sind auf einem Drehtisch 21 montiert, der eine langsame Drehung um seine vertikale Achse ausführt.

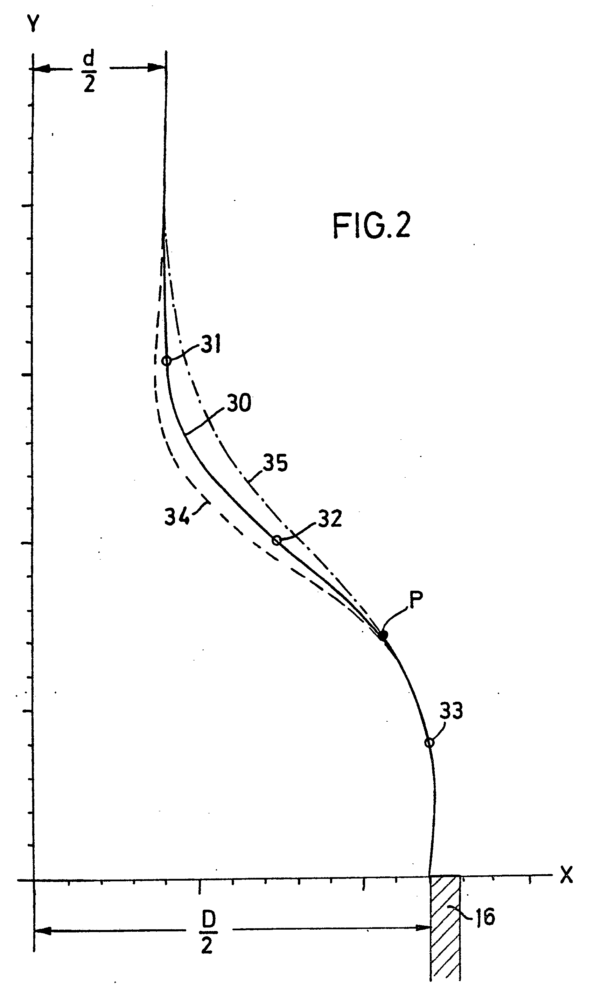

In Fig. 2 sind einige sich durch Veränderung einzelner Einflußgrößen ergebende Verläufe der projizierten Folienblase dargestellt. An der durchgezogenen Kurve 30 sind die Stelle 31 minimalen Durchmessers, der Wendepunkt 32 und die Stelle 33 maximalen Durchmessers dargestellt. Hinter der Stelle 33 verringert sich der Blasendurchmesser wieder geringfügig, bevor der Schlauch in den Ring 16 eintritt. Der Halbmesser des Folienschlauches am Düsenspalt ist mit d/2 und der Blasenhalbmesser im Ring 16 mit D/2 bezeichnet. Der Ring 16 bewirkt eine Fixierung des Blasendurchmessers und trägt zur Konstanz der Folienabmessung bei.

Versuche haben gezeigt, daß die Folienfestigkeit in Querrichtung bei der mit 34 bezeichneten Blasenkontur besser ist als bei der Kurve 35. Die Kurve 34 hat einen noch ausgeprägteren Minimalwert, während der Maximalwert 33 etwa derselbe ist wie derjenige der Kurve 30.

Eine Blasenform der Kurve 35, bei der überhaupt kein ausgeprägter Minimalwert vorhanden ist, zeigt dagegen besonders schlechte Folienfestigkeit in Querrichtung.

Eine Blasenform der Kurve 30 hat sich als ziemlich instabil erwiesen. Der Entstehung einer solchen Blasenform muß möglichst entgegengewirkt werden.

Bei der Darstellung in Fig. 2 wurden die Kurven in ein Koordinatensystem gezeichnet, dessen X-Achse in der Ebene der Endausformung, d.h. am Beginn des Ringes 16, liegt, und deren Y-Achse mit der Symmetrieachse des Schlauches bzw. der Folienblase zusammenfällt.

Man erkennt, daß der Verlauf der Projektion der Folienblase mit guter Annäherung einer Gleichung dritten Grades entspricht. Für die x- und y-Koordinaten desjenigen Punktes $E_i$ der Projektionskurve, an dem die Projektionskurve den kleinsten Durchmesser hat, und desjenigen Punktes $E_a$, an dem die Projektionskurve den größten Durchmesser hat, gelten etwa die folgenden Grenzen:

$$E_i : \left[ x < \frac{d}{2} ; \frac{D}{2} < y < 2D \right]$$
$$E_a : \left[ \frac{D}{2} \leq x ; y < D \right] \quad \text{bei} \quad \frac{1}{2} < \frac{d}{D} < \frac{1}{4} .$$

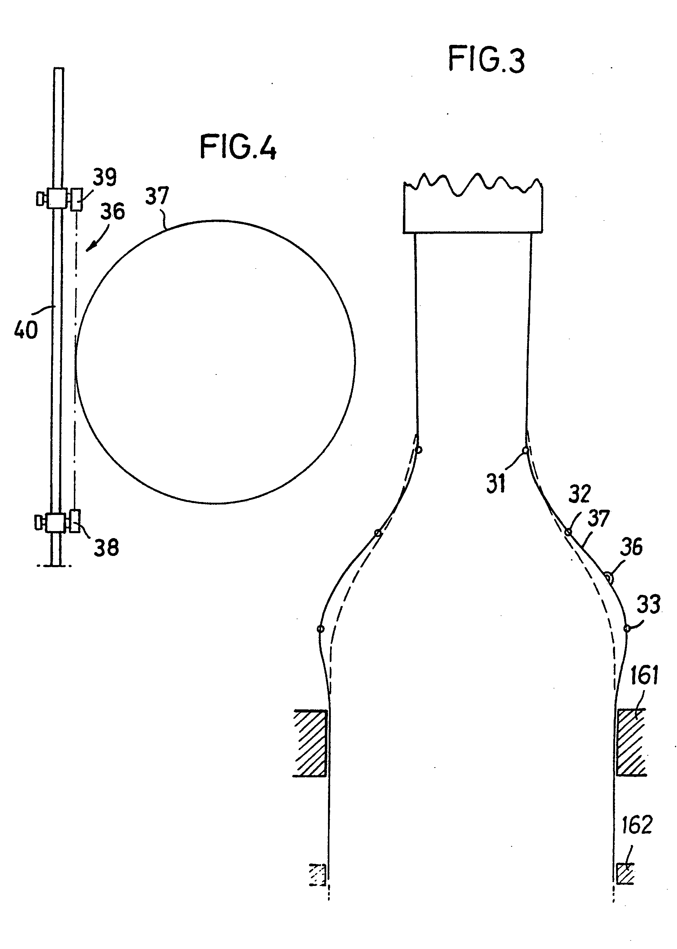

In dem Ausführungsbeispiel der Fig. 3 und 4 ist eine Abtastvorrichtung in Form einer Lichtschranke 36 dargestellt, die in dem Bereich zwischen dem Wendepunkt 32 und der Stelle 33 maximalen Durchmessers angeordnet ist. Zunächst sind die verschiedenen Verfahrensparameter experimentell so eingestellt worden, daß sich eine stabile Folienblase bei guter Qualität der hergestellten Folien ergibt. Die Kontur dieser Folienblase ist mit 37 bezeichnet. An diese Folienblase ist die Lichtschranke 36 in der Weise angesetzt, daß der von der Lichtquelle 38 ausgehende und auf die Fotozelle 39 gerichtete Lichtstrahl von der Folienblase gerade unterbrochen wird. Dies bedeutet, daß keine Nachregelung des Verfahrensablaufs erforderlich ist. Treten an den Abquetschwalzen oder an der Zuleitung bzw. in dem Material der Folienblase Luftverluste auf, verkleinert sich der Durchmesser der Folienblase. Die Lichtschranke 36 wird freigegeben und das entsprechende Signal über ein Relais und ein Magnetventil mit Drossel zur dosierten Nachfüllung der in den Schlauch hineingeblasenen Stützluftmenge verwendet. In diesem Zusammenhang sei vermerkt, daß bei den oftmals sehr dünnen Folien mit einer Stärke von 0,010 bis 0,015 mm gelegentlich kleine Fehlstellen auftreten können, die die Zufuhr zusätzlicher Stützluft erforderlich machen. Verändert sich infolge des Entweichens von Luft die Form der Folienblase, dann kann dies zum Zusammenfallen und damit zur Unterbrechung des Herstellungsprozesses führen. Durch die erfindungsgemäße Regeleinrichtung wird dies in schneller und zuverlässiger Weise verhindert.

Die Lichtquelle 38 und die Fotozelle 39 sind an einer Schiene 40 angebracht, die einstellbar befestigt ist und nach Einstellen der optimalen Folienblase an die Folienblase in der beschriebenen Weise heranbewegt werden kann.

Bei der Folienherstellung im Blasverfahren kann es vorkommen, daß infolge von Ungleichmäßigkeiten der Extruderdüse die Stärke der Folie über die Folienbreite geringfügig variiert. Um zu vermeiden, daß die dickeren Bereiche beim Aufwickeln der Folie immer übereinandergestapelt werden, wird die Flachlege- und Abzugsvorrichtung in bezug auf die Extruderdüse langsam verdreht. Dabei kann entweder die Flachlege- und Abzugsvorrichtung drehbar, und die Extruderdüse feststehend angeordnet sein, wie in Fig. 1 dargestellt, oder umgekehrt. Wird ein solches drehendes System angewandt, dann sollte die Lichtschranke 36 drehfest zur Extruderdüse angeordnet sein. Wenn die Extruderdüse sich dreht, sollte die Lichtschränke mit umlaufen.

Zur Fixierung des Blasendurchmessers dienen die beiden Ringe 161 und 162, von denen der längere Ring 161 drehfest mit der Extruderdüse und der andere Ring 162 drehfest mit der Flachlege- und Abzugsvorrichtung verbunden ist. Auf diese Weise wird verhindert, daß Fehlstellen der Folie, die sich im Bereich der Flachlege- und Abzugsvorrichtung ergeben, Auswirkungen im Bereich der Lichtschranke haben können. Die Ringe 161 und 162 können als verstellbare Irisblenden ausgebildet sein. Es können auch gegebenenfalls noch mehr Ringe hintereinander angeordnet sein.

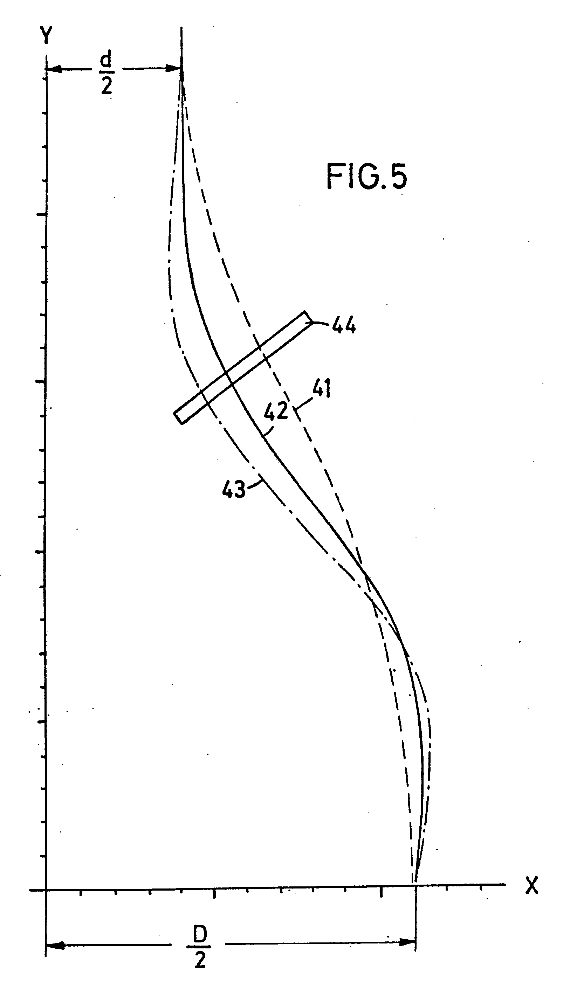

Fig. 5 zeigt in einer Darstellung ähnlich derjenigen der Fig. 2 den Einfluß der durch den Kühlring 13 von außen her gegen den Folienschlauch geblasenen Kühlluftmenge auf die Form der Folienblase. Die Folienblase hatte zunächst die gestrichelt dargestellte Form 41, ohne ausgeprägte Minimumstelle. Ausgehend von dieser Form wurde die Kühlluftmenge verändert, so daß sich die als durchgezogene Linie 42 dargestellte Blasenform ergab, die im Anfangsbereich der Folienblase einen kleineren Durchmesser hat als bei der Kurve 41 und einen ausgeprägteren Maximumbereich aufweist als diese.

Nach weiterer Erhöhung der Luftmenge stellte sich sprunghaft die strichpunktiert dargestellte Kurve 43 ein, bei der Maximumwert und Minimumwert gegenüber der Kurve 42 noch verstärkt sind. Bei noch weiterer Verstärkung der Luftmenge ging die Form der Folienblase zurück auf die Kurve 42.

Diese Versuche zeigen, daß eine Veränderung der Kühlluftmenge nicht notwendigerweise eine Veränderung der Form der Folienblase mit bestimmter Tendenz zur Folge haben muß, sondern ganz verschiedene Auswirkungen haben kann. Zur Regelung der Kühlluftmenge kann beispielsweise eine Lichtband 44 aus einer Reihe von Fotozellen in der in Fig. 5 dargestellten Weise in dem Bereich zwischen dem Wendepunkt und dem Minimalwert des Schlauchdurchmessers angeordnet werden, und zwar möglichst rechtwinklig zu der Schar der möglichen Kurven. Diejenigen Fotozellen, die von der Schlauchblase abgedeckt werden, geben die Regelamplitude an, während das Vorzeichen, mit dem der Regeleingriff erfolgen soll, davon abhängig ist, ob der betreffende Punkt durch Vergrößerung oder Verkleinerung der Folienblase eingenommen wurde. Es ist daher zusätzlich eine Einrichtung vorzusehen, die eine Aufweitung und eine Verkleinerung der Folienblase erkennt, um festzustellen, ob zur Stabilisierung eine Erhöhung oder eine Verringerung der Kühlluftmenge erforderlich ist. Veränderungen der Kühlluftmenge sind in der Regel erforderlich, wenn sich die Raumlufttemperatur ändert.

Vorstehend wurden lediglich einige Beispiele für die Beeinflussung verschiedener Verfahrensparameter gegeben. Grundsätzlich kann nach dem erfindungsgemäßen Verfahren jede Formänderung der Folienblase festgestellt und in Abhängigkeit hiervon die Regelung eines geeigneten Prozeßparameters durchgeführt werden. Über Prozeßrechner lassen sich alle meßbaren Größen von Druck, Temperatur, Menge und Zeit dem Kurvenbild zuordnen. Werte aus Untersuchungen des Rohstoffes und der fertigen Folie können das Zahlenmaterial ergänzen.

Außer der Durchführung einer Regelung ist das erfindungsgemäße Verfahren auch für die Rohstoffauswahl im Hinblick auf das jeweils gewünschte Endprodukt geeignet. Ein weiteres Anwendungsgebiet ist die Entwicklung neuer Rohstofftypen, bei denen das erfindungsgemäße Verfahren zur Erzielung vergleichbarer und reproduzierbarer Ergebnisse beiträgt.

Anwendungen des erfindungsgemäßen Verfahrens ergeben sich auch bei der Auswahl und Weiterentwicklung von Maschinen und Anlagenteilen der Folienblasvorrichtungen, insbesondere für die Optimierung der Leistung.

**Patentansprüche**

1. Folienblasverfahren, bei welchem durch Extrusion ein Folienschlauch hergestellt und durch inneren Überdruck zu einer Folienblase aufgeweitet wird, die sich von einer Stelle kleinsten Durchmessers aus zunächst zunehmend erweitert und über eine Wendepunktstelle eine Stelle maximalen Durchmessers erreicht, um schließlich flachgelegt zu werden, dadurch gekennzeichnet, daß die Weite der Folienblase an einer ersten Meßstelle zwischen der Wendepunktestelle und der Stelle maximalen Durchmessers überwacht wird.

2. Folienblasverfahren nach Anspruch 1, dadurch gekennzeichnet, daß die Weite der Folienblase an einer zweiten Meßstelle, die zwischen der Stelle minimalen Durchmessers und der Wendepunktstelle leigt, überwacht wird.

3. Folienblasverfahren nach Anspruch 1 oder 2, dadurch gekennzeichnet, daß in Abhängigkeit von der an der ersten Meßstelle ermittelten Weite der Folienblase die Blasluftmenge geregelt wird.

4. Folienblasverfahren nach Anspruch 2, dadurch gekennzeichnet, daß in Abhängigkeit von der an der zweiten Meßstelle ermittelten Weite der Folienblase die Menge von Kühlluft geregelt wird, die von außen gegen den Folienschlauch geblasen wird.

5. Folienblasverfahren nach den Ansprüchen 1 bis 4, dadurch gekennzeichnet, daß bei unzulässigen Abweichungen der Folienblase von Sollwerten an den Abtaststellen eine Abfrage verschiedener Verfahrensparameter erfolgt, die innerhalb vorgegebener Toleranzbereiche liegen müssen, und daß Abweichungen dieser Verfahrensparameter von ihren Toleranzbereichen zur Anzeige gebracht werden oder Schaltvorgänge auslösen.

6. Folienblasvorrichtung zur Durchführung des Verfahrens nach einem der Ansprüche 1 bis 5, mit einer ringförmigen Extruderdüse, die einen Blasluftauslaß aufweist, mindestens einem im Abstand von der Extruderdüse angeordneten Ring zur Fixierung der Folienblase, und einer hinter dem Ring angeordneten Flachlege- und Abzugsvorrichtung, dadurch gekennzeichnet, daß an einer ersten Meßstelle (P) zwischen der Wendepunktstelle (32) der Folienblase und der Stelle (33) maximalen Durchmessers eine Abtastvorrichtung (36) angeordnet ist, die die radiale Aufweitung der Folienblase (37) und/oder den Abstand von (P) von der Extruderdüse überwacht.

7. Folienblasvorrichtung nach Anspruch 6, dadurch gekennzeichnet, daß an einer zweiten Meßstelle zwischen der Stelle (31) minimalen Durchmessers und der Wendepunktstelle (32) eine zweite Abtastvorrichtung (44) angeordnet ist.

8. Folienblasvorrichtung nach Anspruch 6 oder 7, dadurch gekennzeichnet, daß die Flachlege- und Abzugsvorrichtung (17, 18, 19) in bezug auf die Extruderdüse (11) rotiert, und daß mindestens zwei Ringe (161, 162) mit gegenseitigem Abstand vorgesehen sind, von denen der eine in bezug auf die Extruderdüse und der andere in bezug auf die Flachlege- und Abzugsvorrichtung feststeht und der Ring (161), der in bezug auf die Extruderdüse feststeht, eine längere Führung vermittelt.

9. Folienblasvorrichtung nach den Ansprüchen 6 bis 8, dadurch gekennzeichnet, daß die Ringe (161, 162) aus Irisblenden bestehen und wenigstens zwei Irisblenden in bezug auf die Extruderdüse feststehen.

10. Folienblasvorrichtung nach einem der Ansprüche 6 bis 9, dadurch gekennzeichnet, daß die Abtastvorrichtung (44) aus einem Fotozellenband besteht.

11. Folienblasvorrichtung nach Anspruch 10, dadurch gekennzeichnet, daß eine Einrichtung vorgesehen ist, die eine Aufweitung und eine Verkleinerung der Folienblase erkennt und in Abhängigkeit davon die Ausgangssignale der Fotozellen des Fototzellenbandes (44) invertiert oder nicht.

## Revendications

1. Procédé de soufflage de feuilles tubulaires consistant à produire par extrusion un tuyau formé d'une feuille de matière plastique, ledit tuyau, gonflé en bulle par injection de pression, s'élargissant d'abord progressivement à partir d'un point de diamètre minimal et atteignant un point d'inflexion de la variation du diamètre, puis un point de diamètre maximal, pour être finalement replié à plat, ledit procédé étant caractérisé par le fait que la largeur de la bulle est détectée en un premier point de contrôle situé entre le point d'inflexion et le point de diamètre maximal.

2. Procédé selon la revendication 1, caractérisé par le fait que la largeur de la bulle soufflée est détectée en un second point de contrôle, situé entre le point de diamètre minimal et le point d'inflexion.

3. Procédé selon l'une des revendications 1 ou 2, caractérisé par le fait que le débit d'air soufflé est réglé en fonction de la largeur de la bulle soufflée observée au premier point de contrôle.

4. Procédé selon la revendication 2, caractérisé par le fait que le débit d'air de refroidissement, soufflé de l'extérieur vers la feuille tubulaire, est réglé en fonction de la largeur de la bulle détectée au second point de contrôle.

5. Procédé selon l'une des revendications 1 à 4, caractérisé par le fait qu'en cas de variations inacceptables de la géométrie de la bulle par rapport à des valeurs prescrites aux points de contrôle, une exploration de différents paramètres opératoires est effectuée, lesdits paramètres devant être compris à l'intérieur de limites de tolérances préalablement fixées, et qu'en cas d'écart desdits paramètres par rapport à leurs domaines de tolérance, des indications apparaissent ou des commandes sont déclenchées.

6. Dispositif de soufflage de feuilles tubulaires pour la mise en oeuvre du procédé selon l'une des revendications 1 à 5, comportant une filière d'extrusion annulaire pourvue d'une buse de soufflage d'air, au moins une bague située à une certaine distance de ladite filière et destinée à fixer le diamètre de la bulle soufflée et un mécanisme de pliage à plat et d'enroulement situé en aval de ladite bague, le dispositif étant caractérisé par le fait qu'un organe détecteur (36) est placé en un premier point de contrôle (P) situé entre le point d'inflexion (32) de la variation du diamètre de la bulle tubulaire et le point (33) où son diamètre est maximal, ledit organe étant destiné à surveiller l'élargissement radial de la bulle (37) et/ou la distance du point de contrôle (P) à la filière d'extrusion.

7. Dispositif selon la revendication 6, caractérisé par le fait qu'un second organe de détecteur (44) est placé en un second point de contrôle situé entre le point (31) de diamètre minimal et le point d'inflexion (32).

8. Dispositif selon l'une des revendications 6 ou 7, caractérisé par le fait que le mécanisme de pliage à plat et d'enroulement (17, 18, 19) est en rotation par rapport à la filière d'extrusion (11), qu'au moins deux bagues (161, 162), situées à une certaine distance l'une de l'autre, sont prévues, l'une desdites bagues étant solidaire en rotation avec la filière d'extraction et l'autre avec le mécanisme de pliage et d'enroulement, et que la bague (161), qui reste fixe par rapport à la filière, assure le guidage de la bulle sur un parcours plus long que l'autre.

9. Dispositif selon l'une des revendications 6 à 8, caractérisé par le fait que les bagues (161, 162) sont constituées par des diaphragmes à iris et que deux au moins desdits diaphragmes sont fixes par rapport à la filière d'extrusion.

10. Dispositif selon l'une des revendications 6 à 9, caractérisé par le fait que l'organe détecteur (44) est constitué par une rangée de cellules photoélectriques.

11. Dispositif selon la revendication 10, caractérisé par le fait qu'un agencement est prévu pour distinguer un élargissement d'un rétrécissement de la bulle soufflée et qu'en fonction de ces données, les signaux ámis par les cellules de la rangée photoélectrique sont inversés ou non.

## Claims

1. Blown film process comprising preparing by extrusion a film tubing and expanding it by internal excess pressure so as to obtain a film bag which increases in diameter from a smallest diameter via a turning or transition point to a maximum diameter and which is subsequently flattened, characterized in that the width of the film bag is controlled at a first measuring station located between the turning point site and the site of the maximum diameter.

2. Blown film process according to claim 1, characterized in that the width of the film bag is monitored at a second measuring station between the site of minimum diameter and the turning point site.

3. Blown film process according to claim 1 or 2, characterized in that the amount of blown air is regulated in response to the width of the film bag as determined at the first measuring station.

4. Blown film process according to claim 2, characterized in that the amount of cooling air blown to the exterior of the film tubing is adjusted in response to the width of the film bag as determined at the second measuring station.

5. Blown film process according to claims 1 to 4, characterized in that with inadmissible variations of the film bag as to desired values at the scanning points an examination of the different process parameters is made which must be within given ranges of tolerances and that deviations of said process parameters from their ranges of tolerances are recorded or initiate switching actions.

6. Blown film apparatus for performing the process according to one of the preceding claims 1 to 5, comprising an annular extrusion die having a blowing air outlet, at least one ring arranged at a distance from the extrusion die for fixing the film bag and a flattening and take-off device arranged behind the ring, characterized in that at a first measuring station (P) between the turning point site (32) of the film bag and the site (33) of the maximum diameter, there is provided a scanning device (36) for monitoring the radial expansion of the film bag (37) and/or the distance of (P) from the extrusion die.

7. Blown film apparatus according to claim 6, characterized in that at a second measuring station between the site (31) of the minimum diameter and the turning point site (32) there is fitted a second scanning device (44).

8. Blown film apparatus according to claim 6 or 7, characterized in that the flattening and take-off device (17, 18, 19) is rotating with respect to the extrusion die (11) and that at least two mutually spaced rings (161, 162) are provided of which one is stationary with respect to the extrusion die and the other is stationary with respect to the flattening and take-off device and that ring (161) stationary with respect to the extrusion die, gives a longer guidance.

9. Blown film apparatus according to claims 6 to 8, characterized in that the rings (161, 162) consist of iris diaphragms and that at least two iris diaphragms are stationary with respect to the extrusion die.

10. Blown film apparatus according to one of the preceding claims 6 to 9, characterized in that the scanning device (44) consists of a photosensorbank.

11. Blown film apparatus according to claim 10, characterized in that there is provided an assembly for detecting an expansion and a reduction of the film bag and subject thereto inverting or not, the output signals of the photo cells of the photosensorbank (44).

FIG.1

FIG.2

FIG.3

FIG.4

39
36
37
40
38

31
32
37
36
33
161
162

FIG.5